# EUROPEAN PATENT APPLICATION

(11) **EP 2 571 127 A1**
(43) Date of publication of application: **20.03.2013**
(21) Application number: 12275143.1
(22) Date of filing: 14.09.2012
(51) Int. Cl.: H02H 3/06, H02H 3/093, H02H 7/085, F04B 49/06

(54) **Electrical supply control device**

(30) Priority: 16.09.2011 GB 201116064
(71) Applicant: Matsuko Pte Ltd, Singapore 239922 (SG)
(72) Inventor: Vogt, Matthias, 43860 Ametlla de Mar (ES)
(74) Representative: Salmon, Victoria Beatrice

(57) **Abstract**

The present invention provides an electrical supply control device which is capable of monitoring its current load, comparing that detected current with its expected parameters and modifying the current supply when it is operating outside normal operation parameters for a predetermined period. The device will turn itself off when it is operating outside the normal parameters for too long and will restart after a predetermined period of time to contine operating for as near as possible to the total period in the day which was specified in the programmed "on" time.

Particular applications include use to control water pumps and electrically operated valves.

## Description

The present invention relates to an electrical supply control device. The present application has particular application in relation to devices for controlling electrical supply to electrical devices such as electric pumps which are subject to autonomous "cut out" by some other regulating device.

Electric pumps are a commonplace means for the circulation or delivery of fluids in numerous applications. Electric pumps form an integral part of the systems to manage water purity in ponds, swimming pools, spas and aquatic installations. They are used to transport water over distances, as well as to produce pressure needed for filter systems.

Electrical pumps can be controlled via a switch box. Known devices such as that disclosed in EP 1,248,504, coupled with programmable plug units will allow pumps and other devices to be programmed to run at times specified by settings in the programmable plug.

Many inventions have been made to deal with problems that relate to various aspects of the use of electric (and other powered) pumps. For example safety means relating to pumps that suck water from spas and swimming pools include devices to stop the pump and raise an alarm if the flow of water is impeded (e.g. US 7,988,425).

A pump circulating water for a fish tank or pond may draw in weed or other matter and become temporarily clogged. When the pump attempts to continue operating despite a blockage occurring, this is likely to cause the pump to overheat. This can damage the pump. For this reason, most electric pumps suitable for use with ponds, pools and other water systems are supplied with an integral thermostatic cut out. With such pumps, if a pump becomes clogged and overheats, the thermostatic control built into the pump will cut out the power to the pump until it has cooled sufficiently for the pump to restart. When the thermostat cools sufficiently, the switch will allow power to drive the pump motor again.

However there are a number of problems with the existing systems.

In the case of a conventional thermostatic control, it is possible that power will be restored to a pump a matter of minutes or seconds of the previous cut out. If this is the case it is possible the motor will still be close to its cut out temperature. The action of the thermostatic switch in a situation where the cause of the pump blockage is not remedied for some time and the pump is already near to its overheat temperature, will lead to repeated re-starting of the pump. The pattern of restarting of an unattended pump may therefore continue so many times as to risk undesired wear and undetected reduction of circulation of water.

Such a problem is particularly an issue for water pumps, as water pumps are unattended for long periods. In such circumstances it may not be readily ascertainable that a pump is overloaded or being repeatedly re-started until other undesirable consequences have occurred, for example, fish have died or the pond and water in it has become grossly contaminated with algae.

In addition thermostatic cut outs are relatively insensitive in that, in order to accommodate the normal working temperature range for a device, a thermostatic cut out needs to be arranged to be triggered only after a significant increase in temperature. Setting a trigger temperature outside a device's ordinary working temperature range ensures that a cut out is not accidentally triggered during normal operation. However, setting a trigger point outside the normal operating range also means that some increase in temperature is permitted before the cut out takes effect and in some circumstances damage may occur during the delay between a problem occurring and a detectable temperature increase arising.

In view of the above an alternative regulation system are desirable.

In accordance with one aspect of the present invention there is provided an electrical supply control device for controlling the supply of electricity to an electrical device, the control device comprising: a monitor operable to monitor the current load required by an electrical device connected to the control device; a comparator operable to compare the current load detected by the monitor with the normal operation parameters for the electrical device; a control module operable to modify the current supplied to the electrical device when the comparator determines that the current load detected by a monitor is outside the normal operation parameters for the monitored electrical device, wherein the control module is arranged to switch off a monitored device which is determined to be operating outside its normal operational parameters for a predetermined period of time and attempt to restart the monitored electrical device after the predetermined period of time and cause the monitored device to operate for a period determined based upon the normal period of operation of the monitored device and the period of operation which occurred prior to abnormal operation.

In some embodiments the period determined based upon the normal period of operation of the monitored device and the period of operation which occurred prior to abnormal operation may be the difference between the normal period of operation of the monitored device and the period of operation which occurred prior to abnormal operation.

In some embodiments the period determined based upon the normal period of operation of the monitored device and the period of operation which occurred prior to abnormal operation may be a fraction of the difference between the normal period of operation of the monitored device and the period of operation which occurred prior to abnormal operation.

In some embodiments the control module may be arranged upon detection of repeated operation outside of normal operational parameters to attempt to restart the monitored electrical device after the predetermined period of time and then cause the monitored device to operate for limited period of time before halting the device and then causing the device to be restarted after a delay. In such embodiments the control module may be arranged to cause the monitored device to operate for limited period of time before halting the device and then causing the device to be restarted after a delay until the total period of operation equals or exceeds the normal period of operation of the monitored device.

In some embodiments the control module may be arranged to attempt to restart the monitored electrical device after the predetermined period of time and cause the monitored device to operate at a reduced current level than the current level utilised prior to the detected period of operation outside of a device's normal operational parameters. In such embodiments the control module may be arranged to cause a monitored device to operate at a reduced current level than the current level utilised for prior to a detected period of operation outside of a device's normal operational parameters for time periods relative to normal periods of operation in the ratio of a devices normal current load relative to the reduced current level.

In some embodiments the control module may be arranged to supply current to a device for a period of time when a device is restarted wherein the current is of a different polarity to that applied prior to detected operation outside normal operational parameters.

In some embodiments the control module may be arranged to detect whether on being restarted the electrical device operates within the normal or adapted operational parameters and, if the operation is outside the normal or adapted operational parameters to switch off the monitored device and, after a predetermined time period, to restart it again. If, after a predetermined number of restarts, the operation of the electrical device is outside the normal or adapted operational parameters, the control device may then turn off the electrical device, until the operator can return and see what issues have arisen.

In some embodiments the electrical supply control device may include an alarm arranged to generate a visual or acoustic signal when operation outside of normal parameters is detected. The alarm may be arranged to cease if an electrical device is restarted and the device is able to operate for at least a predetermined time period. Such a predetermined time period may comprise the sum of a plurality of periods of operation. The device may also include a further alarm which indicates a "complete failure" in the event that the control device does not succeed in restarting the electrical device to operate within its normal or adapted parameters. In some embodiments, the alarm and any "all clear" or "complete failure" signal may be transmitted to a distant location by SMS or other message format, from a mobile telecommunications device or via an internet server. That can include delivering alerts to a mobile phone or an internet server, indicating that one of the program status changes had occurred. The communications module can be arranged to allow messages to be received by the switchbox, by SMS or other message format, from a mobile phone or via an internet server, enquiring about the status of or requiring the switchbox to start or stop current to any selected line either immediately or at a pre-programmed time, and optionally being arranged to send confirmatory SMS messages in return stating the line status.

In some embodiments the electrical supply control device may be arranged to monitor and control the current load of a plurality of electrical devices connected to the control device.

In some embodiments the electrical supply control device may be arranged to monitor the current load of electrical devices comprising water pumps or electrically operated valves.

In accordance with a further aspect of the present invention there is provided a switchbox for operating electrical components which incorporates an electrical supply control device as discussed above. Where the switchbox is designed to be used outdoors, it is preferably water tight.

In accordance with yet a further aspect of the present invention there is provided a pump control system comprising a switchbox and pumps.

An embodiment of the invention will now be described by reference to the drawings.
Fig 1 shows a switchbox incorporating an electrical supply control device according to one embodiment of the invention.
Fig 2 shows an exploded view of the switchbox shown in Fig 1.
Figs 3A-C show flowcharts relating to the operation of a microprocessor program embodying an electrical supply control device according to one embodiment of the present invention.

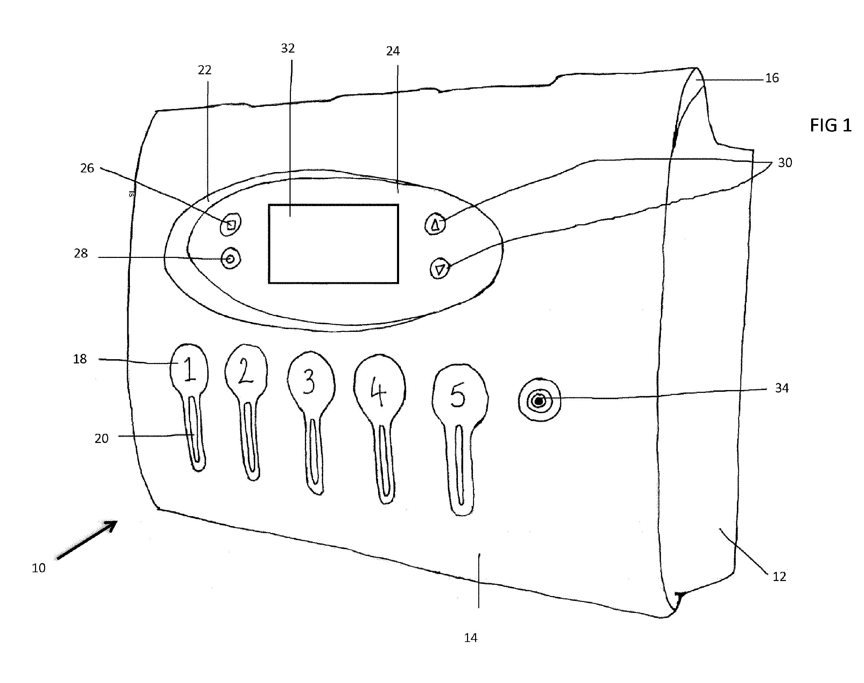

Fig 1 shows a switchbox 10. The switchbox is designed for wall mounting (as discussed further below) and comprises a main unit enclosure 12, having a front panel 14, attached to the main unit enclosure at hinge 16.

The switch box 10 in the present embodiment is designed for use with a water pump in a fish tank and is arranged to detect the malfunctioning of such a pump and enable the pump to be restarted when a malfunction is detected.

More specifically, the switch box 10 is arranged to detect variations in current and load which are indicative of the operation of a pump being hampered by being blocked. If such problems are detected, the switch box 10 then controls the supply of electricity to the pump to attempt to overcome the problem. At the initiation of such control of supply a warning alarm is triggered and, if such control does not overcome the problem a further alarm is triggered to warn a user about the problem.

Compared with existing control systems, the present invention provides a more sophisticated control for an overheated pump in order to control the pattern of restarting without human intervention and thereby to minimize the risk of damage to the pump and to extend the period of running of the pump, notwithstanding its overheating, until a human can investigate the problem and fix it.

Returning to Fig.1, in this embodiment, the switchbox 10 has capacity for 5 output lines and one input line in the main unit enclosure 12. Each output line is operable through a manual button 18 in the front panel 14. An LED light associated with each button 18 can be observed through translucent covers 20 set into the front panel 14. When the relevant button 18 has been operated to turn on the associated power line, the LED will be illuminated and observable through its respective cover 20.

The front panel 14 has a recess 22 in which a display cover 24 is located. Program buttons 26, 28, 30 are operable through the display cover 24. The display cover 24 also provides access for a display screen 32.

Alongside the manual buttons 18, there is also a translucent cover 34, through which light from a further LED can be observed when the power to the switchbox 10 has been turned on.

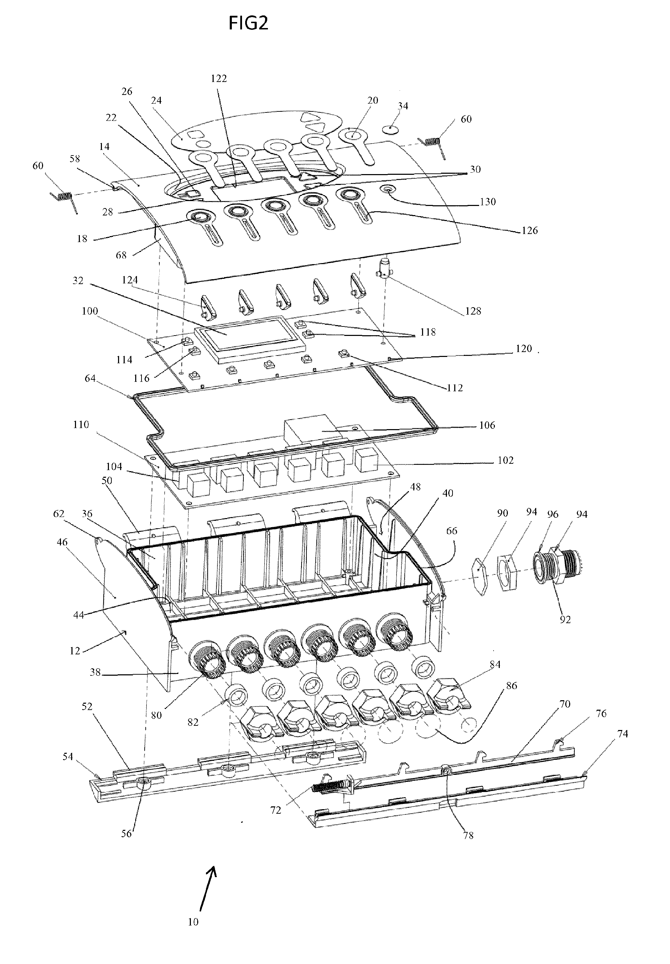

Further details of the construction of the switchbox 10 can be observed from Fig 2, which is an exploded view of the components of the switchbox.

The main enclosure 12 has an interior space defined by integrally moulded upper and lower walls 36, 38, inner shaped side walls 40 and rear wall 44. Side walls also comprise outer side walls 46. The main enclosure 12 also has two interior voids 48, defined by inner and outer side walls 40, 46, upper wall 36 and rear wall 44. Four apertures (not shown) are moulded in the rear wall 44 within the outer volumes 48. These apertures are designed to receive screws to afix the switchbox 10 to a wall. By providing such mountings externally to the interior space, the mountings will not jeopardise the water tightness of the interior space.

The front panel 14 is hinged to main enclosure 12 along one edge. Three lugs 50 are disposed along the front edge of the upper wall 36. The rear outer edges of lugs 50 interact with grooves 52 in hinge cover 54 to form a series of aligned channels. Hinge cover 54 has three apertures 56 moulded into it. Screws or other fixing devices (not shown) pass through apertures 56 to secure the cover 54 to the lugs 50. A rod (indicated at 58) passes through the channels formed between the lugs and grooves and through channels or apertures (not shown) moulded into the upper rear edge of the front panel in order to form the hinge 16 connecting the front panel 14 to the main enclosure 12. Springs 60 are located at either end of the rod, within the outer edges 62 of the outer side walls 46 and ensure the front panel, when open, stays lifted to enable free access to the interior of the main enclosure 12 even while the unit is installed in its upright configuration on a wall. It will be readily apparent to the skilled person that there are other ways of constructing the attachment of the front panel 14 to the main enclosure 12.

A gasket 64 is provided so that there is a water tight seal between the main enclosure 12 and the front panel 14. The gasket 64 is shaped to follow the contour formed by the edges 66 of the walls of the main enclosure. When the front panel 14 is closed onto the main enclosure 12 a moulded raised rim 68 (having an identical profile to the gasket 64 and moulded on the inside wall of the front panel 14) seats into the gasket 64 arranged around the top of the waterproof interior space of the main enclosure 12.

The front panel 14 can be held shut to the main enclosure 12 by a sliding lock. This comprised a toothed locking slide 70, which is biased towards the closed position by a spring 72. The slide 70 is mounted onto the lower face 42 of the main enclosure by a housing 74. The teeth 76 engage with mouldings (not shown) on the inner surface of the front panel 14. The lock is opened by engaging with an aperture 78 in the slide 70, through a slot in the housing 74

The main enclosure 40 has 6 moulded sealing cable outlets 80 formed into the lower wall 38 of the main enclosure 12. Five of these are arranged to take the five output lines which will connect. The sixth is arranged to receive the input line. Each of the cable outlets 80 has an associated deformable ring 82, which is sized to fit snugly within the cable outlets and a sealing cap 84 which will engage with the screw threads moulded in the outer surface of the cable outlets. These are designed respectively a) to hold the cables securely and prevent ingress of water where the switchbox is installed in outdoor locations and b) when the outlet is not in use, to blank the outlet port and prevent ingress of water. Blanks 86 are shown by dotted lines.

Also shown in fig 2 is an optional input for an armoured cable or for connection of the switchbox with other units of compatible design, which requires removal of the section (not shown) of wall pre-formed to receive the connection that is left filled when moulded. If no armoured cable connection (or extension) is require the filled moulded preformed port is left uncut. When the port is required the filled area is cut out. Where the armoured cable input is subsequently not required, then blanking plate 90 is used to seal the aperture (not shown) in the side wall of the switchbox. Where the input is required, the blanking plate 90 is removed or the port moulding cut out, port 92 is inserted in the aperture and held in place by nuts 94, with gasket 96 providing a water-proof seal from the inside of the main enclosure 12.

As shown in Fig 2, two printed circuit boards are provided within the main enclosure. The first printed circuit board 100 controls the high voltage switching connections within the switchbox 10. Six terminal blocks 102 are provided for each of the six cables. A relay 104 is associated with each outgoing line. Depending on application, this board may be a high voltage board (e.g. 220/240 volts) or a low voltage board, (e.g. 24V). Where the application requires high voltage, then the each switch in the board may be protected by its own fuse (e.g. 13v). The safest form of high voltage circuit board, will also include a fuse to prevent total overload. An electricity flow meter 106 is mounted on the first board 100.

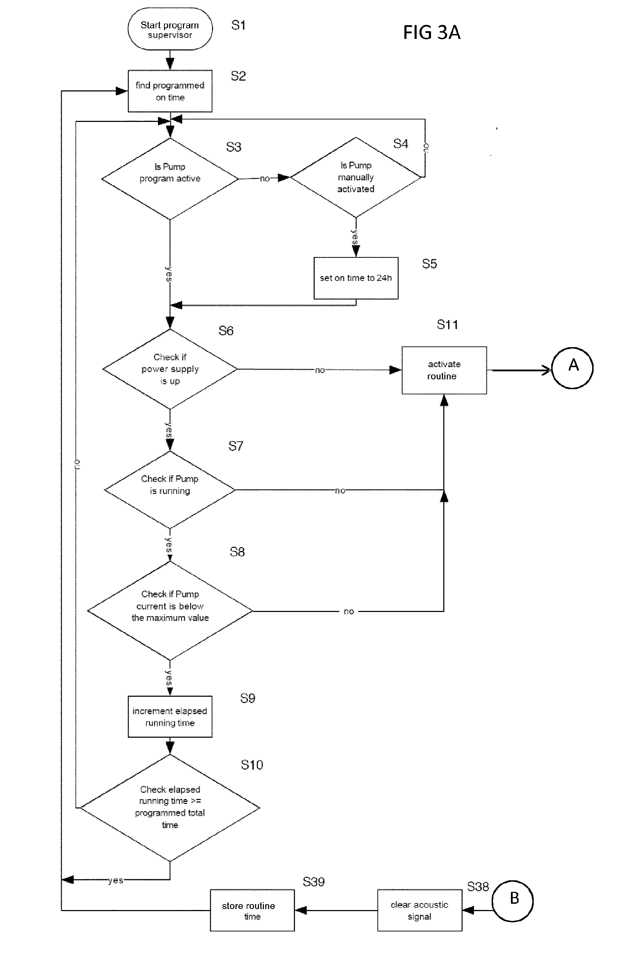

The second printed circuit board 110 has switches 112, 114, 116, 118 mounted on one side. Switches 112 are operated by manual buttons 18 mounted on the front panel 14. Switches 114, 116, 118 are operated respectively by program buttons 26, 28, 30 mounted within the recess 22 in the front panel 14. Six LEDs 120 are mounted on the same side as the switches. Display screen 32 is also mounted on the printed circuit board 110 and is visible through an aperture 122 in the recess 22. The microprocessor and the circuit for operating the programmable element of the switchbox are on the underside of printed circuit board 110 and are not shown. The functionality of that circuit is described below by reference to Figs 3A to 3C.

During assembly, LED lenses 124 are mounted between LEDs 120 and apertures 126 in the front panel14. Translucent covers 20 are then placed over those apertures and manual buttons 18. Additionally a diffusing surround 128 for the LED 120 which is indicative of the power supply is mounted between the second printed circuit board 110 and aperture 130 in the front panel 14. This is covered by translucent cover 34.

The switchbox is operated through a suite of simple programs, by the microprocessor (mounted underneath on the printed circuit board 110, not shown) continuously polling the switches 114, 116 and 118. Some of the programs are for user interaction to allow the switchbox lines to be programmed and the time for which the pump protecting program has been initiated to be inspected.

User interactive programs display to the screen 32, which shows the status of all lines and changes display correspondingly when the user accessible programs are active.

User interactive programs are accessed through the menu button 26, where the user can select and navigate with the up/down buttons 30 and the exit button 28, as follows:

Switchbox setup: to setup time of day and other date functions (in the present embodiment the system is only set up for input of the time of day, but where more sophisticated programming is desired, then the system can also be set up to accept date information). The user is invited to save the settings or to exit without saving.

Line programmed on/off time(s): to set desired times for switching current on and off to any of the lines. The user is invited to save the settings or to exit without saving.

Status and reset: the user is allowed to inspect the time the pump protective program last initiated and to clear the learned pump profile stored by the pump profile program.

Apart from the polling program that checks the state of the switches 114, 116 and 118, the pump supervisor program operates continuously with reference to the line(s) selected at manufacture as lines to which pumps will be connected.

On the first use of a line designated at manufacture as a line to which a pump will be connected, the pump profile learning program initiates and runs until it has saved the profile of the connected pump. The pump profile learning program measures the current drawn by the pump and averages, over a period of running, the maximum current. It then calculates a maximum threshold for the currently connected pump in the current application. The pump profile learning program calculates a minimum current for the currently connected pump in the current application.

Desirably the profile learning program ignores periods of pump running that are known to be anomalous, for example the period immediately following current first flowing to the pump. The profile learned for a pump is saved to memory by the processor.

Additionally or alternatively, the program for pump profiles may be user interactive much in the fashion that printers may be designated by the user as connected to a computer, so that the correct software is used to control the connected printer. In the same way, pre-defined profiles for pumps may be stored and displayed by name to the user for selection, as an alternative to allowing the profile learning program to learn the connected pump's profile.

The pump supervisor program is more specifically described by reference to Figs 3A to C as follows.

Starting with Fig 3A, the pump supervisor program initiates (S1) at 00:01 every day using time from the current time microprocessor which the user has programmed to current time of day. It retrieves the programmed "on" time(s) for the pump (S2), deducting every minute the routine cycles and the pump is run one minute from the total programmed running time for the day.

The supervisor determines (S3) whether current should be supplied to the pump by virtue of the current time of day being during a programmed "on" period. Failing this, it is determined (S4) whether the manual switch 112 (Fig 2) for the line has been set to "on". Failing this test the loop is maintained back to step S2.

If a manual setting for the line is on then the program variable for desired running time is set to 24 hours (S5).

The program checks (S6) to see if the power supply is still up and therefore whether it is possible to allow current to flow to the pump.

Current flow to the pump is checked (S7). If current has stopped this denotes a potential failure of the pump due to cut out or other malfunction. Where a pump is encountering overload the current drawn by the pump will exceed the stored profile level (S8). Although steps S7 and S8 are shown sequentially, the order can be reversed or the steps can take place simultaneously. In fact the level of current can be checked continuously both for current above a safe threshold and/or for current below a minimum.

If the conditions in steps S6, S7 or S8 are met, the pump is considered to be in an overload state and the program routine beginning at step S11 is invoked.

Until the conditions in steps S6, S7 and S8 are met, the main pump supervisor program continues, incrementing the running time for the pump recorded at step S9 and the programme loops back to step S3. When the running time reaches required programmed running time (S10), at which point it is switched off and the programme loops back to step 2 to find the next "on" time.

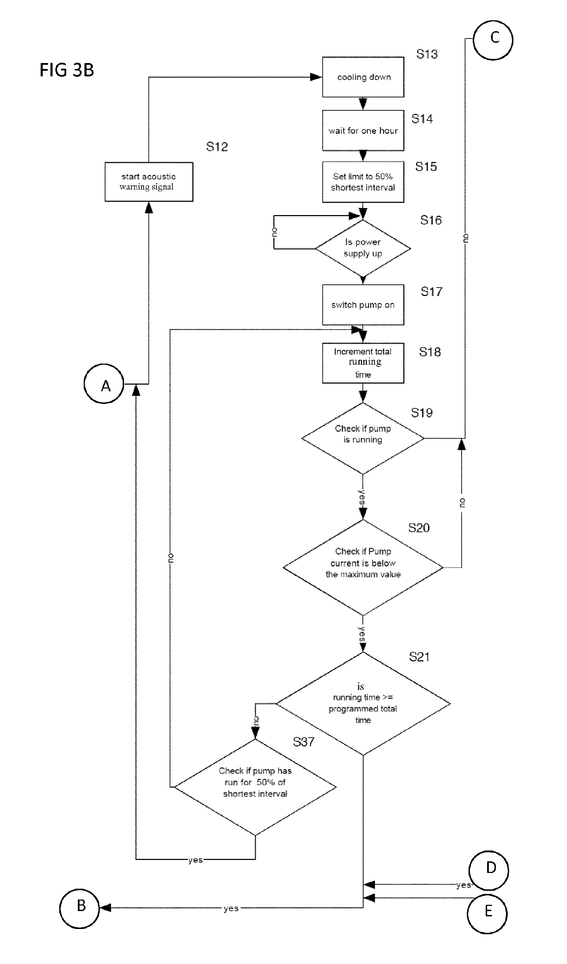

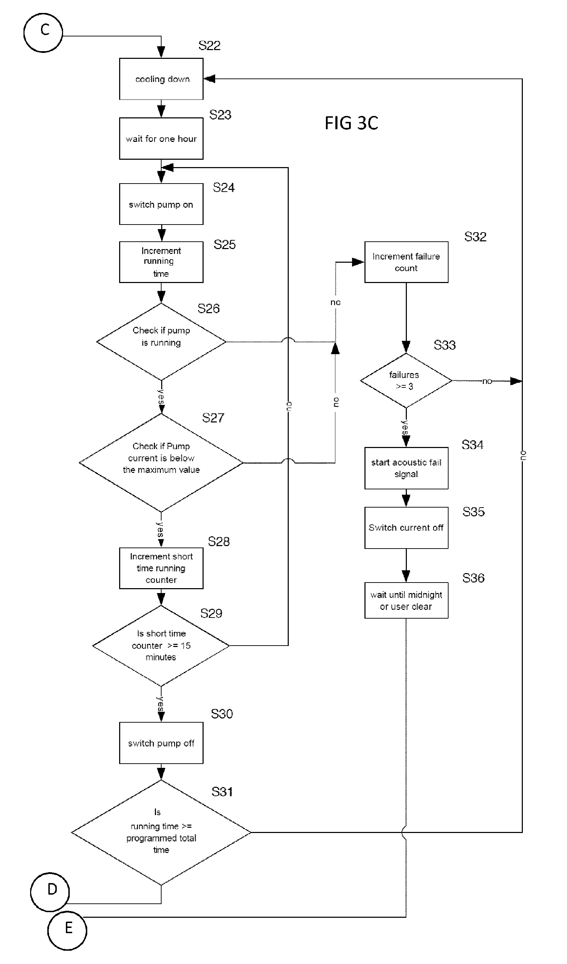

The overload state routine initiated at step S11 begins (with reference to Fig 3B) with making an acoustic warning signal (S12) which is different from an alarm given (S34 - Fig 3C) when the pump protective program has determined that it is not possible to run the pump.

After allowing a period (here set to one hour) for the pump to cool from what may be temporary overheating or overload, (S13, S14) the program deploys one or more strategies to enable the pump to continue operating for as near as possible to the total period in the day which was specified in the programmed "on" time. A first strategy, considered to be appropriate for a pump that is experiencing progressive overload, is to allow current to flow to the pump for the period of time considered optimal given the total amount of time remaining to be "running time" during the day and the period of time for which the pump has successfully run during the current day so far. The microprocessor retrieves the remaining desired running time from the programmed on time in the day and calculates a suitable fraction of that time with which to divide the remaining desired running time and attempt to run the pump in these fractional intervals. For example, the microprocessor might attempt to run the pump for 15 or 30 minutes at a time, before stopping it again for a predetermined period of time and then running it again. That way the full duty cycle can be obtained, but in shorter bursts.

The determined interval to which the overload state routine will attempt to run the pump is set at step S15 (other strategies would be possible at this point). A continued check is made on the input current (S16), in order not to attempt a restart a pump until any intervening mains power cut has finished. Desirably the microprocessor is maintained in operation by a capacitor or other stored power device mounted on the low voltage printed circuit board 110. However the control program is arranged to engage appropriately, even after its operation is interrupted by an extended period of loss of power.

Switching current on to the pump again (S17) the routine enters a loop, (S18 to S22) during which a check is made to see if the pump is still drawing current (S19), or if that current is above the maximum stored value in the profile for the pump (S20). If the current has stopped or the pump is drawing more current than the maximum stored value, it is considered that the pump has either immediately cut out through a thermostatic cut out, or, before the period of running determined at step S15 has been achieved, has reached an overload state by reference to the stored maximum normal operating current. If either of these conditions is encountered the routine invokes the short running cycle starting at step S22 (see Fig 3C).

Until the total running time reaches the desired programmed total running time, checked at step S21, the routine will loop (S37 returns to S18), until the determined running first period of the overload state routine is reached, after which the routine loops back to step S12 and then again to the cooling down period (S13, S14) on precautionary basis before the pump is tried again). Alternatively, the programme can loop from step S37 directly to step S13, and avoid restarting the acoustic warning signal.

With reference to Fig 3C, on entering the short running routine (S22), the program waits (S23) and allows the pump to cool from what may have been a temporary overheating or overload state: the period chosen is determined by the program, taking into account that the strategy considered optimal for the pump at step S15 has not prevented an overload or cutout as the determined by the strategy then adopted. This further waiting time could be one hour.

In the short running routine a loop is then entered (from S24 to S29) with identical tests to the loop at steps S18 to S37, however with a different strategy now being deployed as to the period of running to be attempted. The program attempts to operate the pump for the determined optimal period achievable for a pump that is not suffering mechanical failure but has overloaded or cut out (S29). If this routine leads to overload or cut out within the determined period, further attempts are made for a desired number of times through the loop back (S32, S33 to S22) or, if that desired number (S33) is exceeded then the program sounds an acoustic fail signal (S34) and may display a warning message on the switchbox display. It then cuts current to the pump line (S35) and waits until the program is reset or user clears the failure by operating switch 112 by pressing the line button 18.

If the short running routine exits the loop at step S29 successfully, the current to the pump is stopped (S30) and until the total pump running time reaches the programmed total time for the day (S31) the routine loops back to step S22.

Steps S21, S31 and S36 all proceed on success (i.e. the pump has run for the programmed or reprogammed time) to the program clearing the acoustic signal and any displayed warning message (S38) and saving to the switchbox status memory the date and time of the protective routines completing (S39).

Although in the above described embodiment one program for detecting the malfunctioning of a pump has been described, it will be appreciated that details of the programs and the manner of detection of the malfunctioning of a device may be modified.

Thus for example in some embodiments a potentiometer could be added to the high voltage printed circuit board. In such an embodiment, the program running on the micro processor could be modified in which a further strategy for remedying pump overload is deployed where, for a short period, the pump is activated with the polarity of the current reversed (so that the pump "blows" in the opposite direction to normal, thereby pushing back on the source of possible blockage in the inflow pipe). Thereafter, by means of a lower current being supplied at normal polarity to the pump, the pump can then run in the correct direction but re-ingestion of the blockage is avoided by less vigorous pumping.

In other embodiments the program might be arranged to determine whether a pump can operate at a lower current. Where a lower current is selected, then in order to ensure that the overall volume of water pumped approximates to that which would have been pumped if the pump had operated normally for the total programmed time, then the program may lengthen the period of time for which the pump is operated at the lower current.

In some embodiments the programming of the device may be such that the device will be capable, by detecting, monitoring and storing the characteristics of power consumed, of learning or otherwise determining (by a pump manufacturer supplied data file) the characteristics of the connected pump motor when in normal use. Such an analysis could involve, among other things, ignoring or discarding data obtained in the first few minutes as many motors draw more power when initially turned on than that required for normal running. However, after a minute to two, a motor will settle down to draw its normal load.

Further there are situations where a pump will (for reasons of poor operational tolerances in the manufacture of the pump or discrepancy between the size of pump and the amount of work the pump is actually required to do in a particular application) draw excessive power relative to the situation in which it is used. To enable more efficiency and less power wastage in the operation of the pump the program of the switchbox can calculate from the size of the body of water that is being recirculated, the temperature of the water and the capacity of the pump, the amount of power and operating time at which the pump should be operated and adjust accordingly.

In some embodiments the program may be arranged to determine the likely abilities of a device being operated based on the analysis of the load and current demanded. Thus for example in the case of a water pump, typically greater load is required during an initial induction period when a pump is first operated. The difference between load in the induction period and load during normal operation can be utilized to detect the likely capabilities of a pump and hence appropriate strategies for dealing with pump failure. Typically, more sophisticated pumps which are capable of operating at a greater range of currents exhibit lower differences in load during induction and normal operation.

Thus for example, in some embodiments the switch box may be arranged to detect the performance of a pump at a lower current and if acceptable operate the pump at that lower current. Utilising a lower current may result in reduced water flow. In such circumstance a pump may be operated at a lower current for longer time periods to achieve an equivalent through put of water.

In some embodiments a communications module may be included in the switch box 10 which is arranged to send by SMS or other message format, alerts to a mobile phone or an internet server, indicating that one of the program status changes had occurred on the switchbox.

In such embodiments the communications module may be arranged to allow messages to be received by the switchbox, by SMS or other message format, from a mobile or via an internet server, enquiring the status of or requiring the switchbox to start or stop current to any selected line either immediately or at a pre-programmed time. Desirably the switchbox would send confirmatory SMS messages in return stating the line status.

Although the above embodiment describes a switch box 10 for use in association with a pump for a fish tank, the invention has application beyond the world of fish tanks. It can be applied to swimming pool pumps or irrigation equipment. It may even be applied more widely to any pump or motor which can cut out as a result of overheating and where there is an imperative to maintain continued operation of the pump or motor for as long as possible.

Similarly the present invention could be applied to other equipment other than pumps. Thus for example in some embodiments electrically operated valves could be monitored and the operation of such valves modified on the basis of detected variations in load. Such an embodiment would be particularly applicable to valves which, like water pumps, are liable to become inoperable due to blockage. In the case of valves, this is likely to arise due to scaling and where operation of a valve is found to be defective repeated activation and deactivation of a valve may cause scaling of the valve to break free and normal operation of the valve to be resumed.

## Claims

1. An electrical supply control device for controlling the supply of electricity to an electrical device, the control device comprising:
a monitor operable (s6-8) to monitor the current load required by an electrical device connected to the control device;
a comparator operable (s6-8) to compare the current load detected by the monitor with the normal operation parameters for the electrical device;
a control module operable (s11) to modify the current supplied to the electrical device when the comparator determines that the current load detected by a monitor is outside the normal operation parameters for the monitored electrical device,
wherein the control module is arranged (s13-14) to switch off a monitored device which is determined to be operating outside its normal operational parameters for a predetermined period of time and attempt (s15-17) to restart the monitored electrical device after the predetermined period of time and cause the monitored device to operate for a period determined based upon the normal period of operation of the monitored device and the period of operation which occurred prior to abnormal operation.

2. An electrical supply control device in accordance with claim 1 wherein the period determined based upon the normal period of operation of the monitored device and the period of operation which occurred prior to abnormal operation comprises the difference between the normal period of operation of the monitored device and the period of operation which occurred prior to abnormal operation.

3. An electrical supply control device in accordance with claim 1 wherein the period determined based upon the normal period of operation of the monitored device and the period of operation which occurred prior to abnormal operation comprises a fraction of the difference between the normal period of operation of the monitored device and the period of operation which occurred prior to abnormal operation.

4. An electrical supply control device in accordance with any preceding claim wherein the control module is arranged upon detection of repeated operation outside of normal operational parameters to attempt to restart the monitored electrical device after the predetermined period of time and then cause the monitored device to operate for a limited period of time before halting the device and then causing the device to be restarted after a delay.

5. An electrical supply control device in accordance with claim 4 wherein the control module is arranged to cause the monitored device to operate for a limited period of time before halting the device and then causing the device to be restarted after a delay until the total period of operation equals or exceeds the normal period of operation of the monitored device.

6. An electrical supply control device in accordance with claim 1 wherein the control module is arranged to attempt to restart the monitored electrical device after the predetermined period of time and cause the monitored device to operate at a reduced current level than the current level utilised prior to the detected period of operation outside of a device's normal operational parameters.

7. An electrical supply control device in accordance with claim 6 wherein the control module is arranged to cause a monitored device to operate at a reduced current level than the current level utilised for prior to a detected period of operation outside of a device's normal operational parameters for time periods relative to normal periods of operation in the ratio of a devices normal current load relative to the reduced current level.

8. An electrical supply control device in accordance with any preceding claim wherein the control module is arranged to supply current to a device for a period of time when a device is restarted wherein the current is of a different polarity to that applied prior to detected operation outside normal operational parameters.

9. An electrical supply control device in accordance with any preceding claim wherein the monitor is operable to monitor the current load required by a plurality of electrical devices connected to the control device;
a comparator operable to compare the current loads detected by the monitor with the normal operation parameters for the monitored electrical devices;
a control module operable to modify the current supplied to the electrical devices when the comparator determines that the current load detected by a monitor is outside the normal operation parameters for the monitored electrical devices.

10. An electrical supply control device in accordance with any preceding claim wherein the control module is arranged to detect whether on being restarted the electrical device operates within the normal or adapted operational parameters and, if the operation is outside the normal or adapted operational parameters to switch off the monitored device and, after a predetermined time period, the control module is adapted to restart the electrical device again and, whereby if after a predetermined number of restarts the operation of the electrical device is outside the normal or adapted operational parameters, then to turn off of the electrical device.

11. An electrical supply control device in accordance with any preceding claim which either includes an alarm arranged to generate a visual or acoustic signal when operation outside normal parameters is detected or which includes a communications module which is arranged to send by SMS or other message format, alerts to a mobile phone or an internet server, indicating that one of the program status changes had occurred.

12. An electrical supply control device in accordance with claim 11 where the communications module is arranged to allow messages to be received by the switchbox, by SMS or other message format, from a mobile phone or via an internet server, enquiring about the status of or requiring the switchbox to start or stop current to any selected line either immediately or at a pre-programmed time, and optionally being arranged to send confirmatory SMS messages in return stating the line status.

13. An electrical supply control device in accordance with any preceding claim wherein the monitor is operable to monitor the current load of electrical devices comprising water pumps or electrically operated valves.

14. A switchbox (10) containing an electrical supply control device in accordance with any preceding claim.

15. A pump control system comprising a switchbox in accordance with claim 14 and at least one pump.
